# EUROPÄISCHE PATENTANMELDUNG

(11) **EP 4 677 990 A1**
(43) Veröffentlichungstag der Anmeldung: **14.01.2026**
(21) Anmeldenummer: 25184434.6
(22) Anmeldetag: 23.06.2025
(51) Int. Cl.: A01D 41/127

(54) **MÄHDRESCHER SOWIE VERFAHREN ZUM BETREIBEN EINES MÄHDRESCHERS**

(30) Priorität: 09.07.2024 DE 102024119411
(71) Anmelder: CLAAS Selbstfahrende Erntemaschinen GmbH, 33428 Harsewinkel (DE)
(72) Erfinder: Bormann, Bastian, 33334 Gütersloh (DE); Thiesmann, Waldemar, 49080 Osnabrück (DE); Barther, Marvin, 33803 Steinhagen (DE); Heufekes, Maik, 48147 Münster (DE); Speckamp, Dirk, 59073 Hamm (DE); Gosden, Gabriel, 2820 Gentofte (DK); Larsen, Hans, 2970 Hørsholm (DK); Vestergaard, Lars, 2720 Vanløse (DK); Belau, Sven Carsten, 33332 Gütersloh (DE); Jensen, Axel, 3200 Helsinge (DK)
(74) Vertreter: CLAAS Gruppe

(57) **Zusammenfassung**

Die vorliegende Erfindung betrifft einen Mähdrescher (1), welcher eine Dreschvorrichtung (3) und eine Abscheidevorrichtung (17) als Arbeitsaggregate (62) aufweist, welche von dem Mähdrescher (1) aufgenommenes Erntegut (8) zur Abscheidung von Korn bearbeiten und einen im Wesentlichen das Korn enthaltenden Erntegutstrom an eine Reinigungsvorrichtung (4) als weiteres Arbeitsaggregat (62) übergeben, wobei die Reinigungsvorrichtung (4) einen unausgedroschenes Erntegut enthaltenden Überkehrgutstrom (34) mittels einer Überkehrvorrichtung (25) der Dreschvorrichtung (3) zum erneuten Ausdrusch zuführt und einen gereinigten Erntegutstrom (35) mittels einer Fördervorrichtung (23) einem Korntank (5) zuführt, wobei der Mähdrescher (1) ein Kamerasystem zur Aufnahme von Bildern (50) des Überkehrgutstromes (34) und eine Bildauswertungsvorrichtung (41) zur Auswertung der Bilder (50) sowie ein Fahrerassistenzsystem (36) zur Ansteuerung der Arbeitsaggregate (62) umfasst, wobei die Bildauswertungsvorrichtung (41) dazu eingerichtet ist, die Bilder (50) des Überkehrgutstromes (34) zur Bestimmung von Indikatoren für durch zumindest eines der Arbeitsaggregate (62) verursachte Bearbeitungsverluste zu analysieren und an das Fahrerassistenzsystem (17) zu übertragen, welches die Indikatoren bei der Ansteuerung zumindest eines der Arbeitsaggregate (62) berücksichtigt.

## Beschreibung

Die vorliegende Erfindung betrifft einen Mähdrescher gemäß dem Oberbegriff des Anspruches 1. Weiterhin ist ein Verfahren zum Betreiben eines Mähdreschers gemäß dem Oberbegriff des Anspruches 15 Gegenstand der Erfindung.

Aus der EP 1 543 712 B2 ist ein Mähdrescher gemäß dem Oberbegriff des Anspruches 1 bekannt. Offenbart ist ein Mähdrescher, welcher eine Dreschvorrichtung und eine Abscheidevorrichtung als Arbeitsaggregate aufweist, welche von dem Mähdrescher aufgenommenes Erntegut zur Abscheidung von Korn bearbeiten und einen im Wesentlichen das Korn enthaltenden Erntegutstrom an eine Reinigungsvorrichtung übergeben. Die Reinigungsvorrichtung führt einen unausgedroschenes Erntegut enthaltenden Überkehrgutstrom mittels einer Überkehrvorrichtung der Dreschvorrichtung zum erneuten Ausdrusch zu. Ein von der Reinigungsvorrichtung gereinigter Erntegutstrom wird mittels eines Körnerelevators einem Korntank zugeführt. Der Überkehrvorrichtung sind eine Körnerstrommesseinrichtung und eine Volumenstromsensiereinrichtung zugeordnet. Die Körnerstrommesseinrichtung ist durch Stabsensoren gebildet, die nach dem Körperschallprinzip die Kontakte mit in dem Überkehrerntegutstrom enthaltenen Körner als Überkehrkornanteil registrieren. Die Volumenstromsensiereinrichtung erfasst die von der Überkehrvorrichtung transportierte Überkehrerntegutmenge. Der Überkehrkornanteil sowie die Überkehrerntegutmenge werden, neben durch Klopfsensoren erfassten Verlustmengen der Abscheidevorrichtung und der Reinigungsvorrichtung, von einer Auswerte- und Anzeigeeinheit zur Ansteuerung eines oder mehrerer Betriebsparameter von Komponenten der Reinigungsvorrichtung, Obersieb, Untersieb, Reinigungsgebläse. herangezogen.

Aus der EP 3 075 223 B1 ist ein weiterer Mähdrescher gemäß dem Oberbegriff des Anspruches 1 bekannt, welcher ein Fahrerassistenzsystem zur Ansteuerung der Dreschvorrichtung umfasst. Hierzu werden von einer Sensoranordnung Ausdruschverluste durch einen Ausdruschverlustsensor, ein Bruchkornanteil durch einen Bruchkornsensor, Abscheideverluste durch einen Abscheideverlustsensor, Reinigungsverluste durch einen Reinigungsverlustsensor als Ernteprozessparameter ermittelt. Die Ernteprozessparameter dienen der Regelung der Dreschvorrichtung durch das Fahrerassistenzsystem.

Der vorstehend genannte Stand der Technik fokussiert auf die Ansteuerung der Reinigungsvorrichtung bzw. der Dreschvorrichtung auf Basis von durch diese Arbeitsaggregate erzeugter Erntegutverluste in der Gestalt von aus dem Mähdrescher ausgeschiedenen Erntegut, wobei eine das Arbeitsergebnis dieser Arbeitsaggregate beeinflussende Ausdruschqualität nicht oder nur ungenau ermittelt wird.

Ausgehend vom vorstehend genannten Stand der Technik liegt der Erfindung die Aufgabe zugrunde, einen Mähdrescher sowie ein Verfahren zum Betreiben eines Mähdreschers derart weiterzubilden, dass sich eine Verbesserung der Detektion der Ausdruschqualität erzielen lässt.

Diese Aufgabe wird erfindungsgemäß durch einen selbstfahrenden Mähdrescher mit den Merkmalen des Anspruches 1 gelöst. Weiterhin wird die Aufgabe durch ein Verfahren zum Betreiben eines Mähdreschers mit den Merkmalen des nebengeordneten Anspruches 15 gelöst. Vorteilhafte Weiterbildungen sind Gegenstand der abhängigen Ansprüche.

Gemäß dem Anspruch 1 wird ein Mähdrescher vorgeschlagen, welcher eine Dreschvorrichtung und eine Abscheidevorrichtung als Arbeitsaggregate aufweist, welche von dem Mähdrescher aufgenommenes Erntegut zur Abscheidung von Korn bearbeiten und einen im Wesentlichen das Korn enthaltenden Erntegutstrom an eine Reinigungsvorrichtung als weiteres Arbeitsaggregat übergeben, wobei die Reinigungsvorrichtung einen unausgedroschenes Erntegut enthaltenden Überkehrgutstrom mittels einer Überkehrvorrichtung der Dreschvorrichtung zum erneuten Ausdrusch zuführt und einen gereinigten Erntegutstrom mittels einer Fördervorrichtung einem Korntank zuführt. Erfindungsgemäß ist vorgesehen, dass der Mähdrescher ein Kamerasystem zur Aufnahme von Bildern des Überkehrgutstromes und eine Bildauswertungsvorrichtung zur Auswertung der Bilder sowie ein Fahrerassistenzsystem zur Ansteuerung der Arbeitsaggregate umfasst, wobei die Bildauswertungsvorrichtung dazu eingerichtet ist, die Bilder des Überkehrgutstromes zur Bestimmung von Indikatoren für durch zumindest eines der Arbeitsaggregate verursachte Bearbeitungsverluste zu analysieren und an das Fahrerassistenzsystem zu übertragen, welches die Indikatoren bei der Ansteuerung zumindest eines der Arbeitsaggregate berücksichtigt.

Der Erfindung liegt die Überlegung zugrunde, dass Bearbeitungsverluste der Arbeitsaggregate maßgeblich durch den Ausdruschprozess, der durch die Dreschvorrichtung ausgeführt wird, beeinflusst werden. Den Bearbeitungsverlust der Dreschvorrichtung bildet unausgedroschenes Erntegut, welches der Abscheidevorrichtung und der Reinigungsvorrichtung zugeführt wird. Passiert das unausgedroschene Erntegut diese Arbeitsaggregate, so wird das unausgedroschene Erntegut entweder aus dem Mähdrescher ausgeschieden oder es wird anteilig als Überkehrgutstrom der Überkehrvorrichtung bzw. dem Korntank zugeführt.

Zur Qualifizierung und Quantifizierung der Bearbeitungsverluste werden die Bilder des Überkehrgutstromes durch das Kamerasystem aufgenommen und an die Bildauswertungsvorrichtung zur Auswertung übermittelt. Die Bilder des Überkehrgutstromes werden zur Bestimmung von Indikatoren für die Bearbeitungsverluste analysiert und an das Fahrerassistenzsystem übertragen, welches die bestimmten Indikatoren bei der Ansteuerung zumindest eines der Arbeitsaggregate berücksichtigt.

Dies ermöglicht eine tiefergehende Analyse des Inhaltes des Überkehrgutstromes und somit den Einfluss sowie die Wechselwirkungen der Einstellung der Arbeitsaggregate auf die Ausprägung und Zusammensetzung des Überkehrgutstromes.

Mittels des Kamerasystems kann eine kontinuierliche Überwachung des Überkehrgutstromes vorgenommen werden. Insbesondere wird fortlaufend eine Vielzahl von Bildern des Überkehrgutstromes aufgenommen und durch die Bildauswertungsvorrichtung analysiert, wodurch eine hohe Probenanzahl erreicht wird.

Insbesondere können die Indikatoren eine Ausdruschqualität und/oder ein detektierter Anteil an unausgedroschenen Fraktionen des Ernteguts im Überkehrgutstrom sein. Die Bildauswertungsvorrichtung kann dazu eingerichtet sein, die Ergebnisse der Analyse mittels einer Bedien- und Anzeigeneinheit dem Bediener des Mähdreschers zur Anzeige zu bringen.

Dabei können unausgedroschene Fraktionen ganze Ähren, gefüllte Ährenspitzen, begrannte Körner, bespeltze Körner, Rispen und/oder mit Körnen besetzte Spindelsegmente umfassen.

Die Ausdruschqualität kann insbesondere durch einen Bruchkornanteil, Risse im Korn, einen Anteil an unausgedroschenen Fraktionen, einen Anteil an Nichtkornbestandteilen und/oder einen Anteil an Fremdbesatz im Überkehrgutstrom bestimmt sein.

Wesentlich ist, dass eine Vielzahl von einzelnen die Indikatoren Ausdruschqualität und/oder Anteil an unausgedroschenen Fraktionen bestimmenden Faktoren, welche die Ausdruschqualität und den Anteil an unausgedroschenen Fraktionen bestimmen, bei der Auswertung durch die Bildauswertungsvorrichtung berücksichtigt werden.

So können die Bearbeitungsverluste einen durch die Abscheidevorrichtung und die Reinigungsvorrichtung aus dem Mähdrescher ausgeschiedenen Verlustanteil von unausgedroschenen Fraktionen des Ernteguts umfassen, welcher aufgrund der durch Einstellungen der Dreschvorrichtung erreichten Ausdruschqualität unbearbeitet geblieben ist.

Gemäß einer bevorzugten Weiterbildung kann das Kamerasystem zumindest eine Kamera umfassen, welche entlang des Förderweges der Überkehrvorrichtung in zumindest eine Komponente der Überkehrvorrichtung integriert ist.

Dabei kann die Überkehrvorrichtung eine Leitfläche unterhalb der Reinigungsvorrichtung, eine in einer Mulde angeordnete Querförderschnecke sowie eine Fördervorrichtung als Komponenten umfassen, wobei der von der Reinigungsvorrichtung abgeschiedene Überkehrgutstrom über die Leitfläche in die Querförderschnecke gelangt, welche den Überkehrgutstrom mittels der Fördervorrichtung der Dreschvorrichtung zuführt.

Insbesondere kann die zumindest eine Kamera in die Leitfläche, in die Mulde, entlang des Förderweges der Fördervorrichtung, im Abgabebereich der Fördervorrichtung oberhalb der Dreschvorrichtung und/oder im Übergabebereich zwischen der Querförderschnecke und der Fördervorrichtung integriert sein. Eine Integration der zumindest einen Kamera in die Leitfläche und/oder in die Mulde bietet den Vorteil, dass über eine größere Breite hinweg die Inhaltsstoffe des Überkehrgutstromes erfasst werden können. Die Integration der zumindest einen Kamera entlang des Förderweges der Fördervorrichtung ist insbesondere unter Bauraumaspekten vorteilhaft.

Insbesondere kann in die Leitfläche und/oder in die Mulde ein transparentes Sichtfenster eingelassen sein. Als Material für das Sichtfenster kann Saphirglas oder ein anderes verschleißresistentes Material verwendet werden. Das Überströmen des Sichtfensters durch den Überkehrgutstrom hat den Vorteil, dass das Sichtfenster kontinuierlich gereinigt wird.

Bevorzugt kann die Bildauswertungsvorrichtung dazu eingerichtet sein, die durch das Kamerasystem aufgenommenen Bilder des Überkehrgutstromes mittels eines Maschinenlernalgorithmus zu analysieren. Der Maschinenlernalgorithmus ermöglicht es, die Bilder des Überkehrgutstromes im laufenden Erntebetrieb automatisch und kostengünstig zu analysieren. Insbesondere kann die Analyse in Echtzeit durchgeführt werden.

Hierzu kann der Maschinenlernalgorithmus zumindest ein trainierbares neuronales Netzwerk zur Analyse der Bilder umfassen, wobei das zumindest eine neuronale Netzwerk die von dem Kamerasystem empfangenen Bilder mittels semantischer Segmentierung pixelweise analysiert und die Pixel einer Klassifizierung unterzieht.

Besonders bevorzugt kann die Bildanalyse durch das zumindest eine neuronale Netzwerk mittels Instanz-Segmentierung erfolgen. Die Instanz-Segmentierung kombiniert die Vorteile der semantischen Segmentierung und der Objektdetektion. Mit Hilfe der Instanz-Segmentierung können Objekte pixelgenau verschiedenen Klassen zugeordnet werden. Besonders hilfreich ist diese Technologie in Anwendungsfällen, in denen Objekte sehr nahe beieinanderliegen, sich berühren oder überlappen, was im Fall der Bildanalyse des Überkehrstromes gegeben ist. Die Instanz-Segmentierung ermöglicht es, die Lage der zu klassifizierenden Objekte im Bild und deren Form zu bestimmen.

Insbesondere können der Klassifizierung durch den Maschinenlernalgorithmus Klassen aus der Gruppe ganze Ähren, gefüllte Ährenspitzen, begrannte Körner, bespeltze Körner, Rispen, mit Körnen besetzte Spindelsegmente, Beikrautsamen, Schalen, Stängel, Schoten, Spindel, Stroh und/oder Fremdkörper zugrunde liegen aus der Gruppe ganze Ähren, gefüllte Ährenspitzen, begrannte Körner, bespeltze Körner, Rispen, mit Körnen besetzte Spindelsegmente, Beikrautsamen, Schalen, Stängel, Schoten, Spindel, Stroh und/oder Fremdkörper zugrunde liegen. Neben der Einteilung in unterschiedliche Klassen wird auch die jeweilige Anzahl an detektierten Objekten einer Klasse bestimmt. Die Vielzahl an unterschiedlichen Klassen ermöglicht eine genauere Analyse der Zusammensetzung des Überkehrgutstroms, so dass im Ergebnis auch die Beurteilung der Ausdruschqualität verbessert wird.

Bevorzugt kann das Fahrerassistenzsystem dazu eingerichtet sein, in Abhängigkeit von der Klassifizierung Steuersignale zur Ansteuerung zumindest eines der Arbeitsaggregate zu generieren, um die Bearbeitungsverluste zu minimieren.

Gemäß einer bevorzugten Weiterbildung kann das Fahrerassistenzsystem mit der Dreschvorrichtung sowie der Reinigungsvorrichtung jeweils einen eigenständig arbeitenden Einstellautomaten bildet, welcher der Optimierung der Ansteuerung der Dreschvorrichtung und der Reinigungsvorrichtung zur Durchführung eines jeweiligen Teilarbeitsprozesses dient.

Bevorzugt kann die Bildauswertungsvorrichtung dazu eingerichtet sein, die von der Bildauswertungsvorrichtung durch die Bildanalyse bestimmten Indikatoren für die Bearbeitungsverluste den Einstellautomaten als Eingangsgrößen zur Verfügung zu stellen.

Die eingangs gestellte Aufgabe wird weiterhin durch ein Verfahren mit den Merkmalen des Anspruches 15 gelöst.

Gemäß dem Anspruch 15 wird ein Verfahren zum Betreiben eines Mähdreschers vorgeschlagen, welcher eine Dreschvorrichtung und eine Abscheidevorrichtung als Arbeitsaggregate aufweist, durch welche von dem Mähdrescher aufgenommenes Erntegut zur Abscheidung von Korn bearbeitet und einen im Wesentlichen das Korn enthaltenden Erntegutstrom an eine Reinigungsvorrichtung als weiteres Arbeitsaggregat übergeben wird, wobei von der Reinigungsvorrichtung ein unausgedroschenes Erntegut enthaltender Überkehrgutstrom mittels einer Überkehrvorrichtung der Dreschvorrichtung zum erneuten Ausdrusch zugeführt und ein gereinigter Erntegutstrom einem Korntank zugeführt wird. Erfindungsgemäß ist vorgesehen, dass mittels eines im Mähdrescher angeordneten Kamerasystems Bilder des Überkehrgutstromes aufgenommen und an eine Bildauswertungsvorrichtung zur Auswertung der Bilder übermittelt werden, wobei die Arbeitsaggregate durch ein Fahrerassistenzsystem angesteuert werden, wobei die aufgenommenen Bilder des Überkehrgutstromes zur Bestimmung von Indikatoren für durch zumindest eines der Arbeitsaggregate verursachte Bearbeitungsverluste durch die Bildauswertungsvorrichtung analysiert und an das Fahrerassistenzsystem übertragen werden, welches die Indikatoren bei der Ansteuerung zumindest eines der Arbeitsaggregate berücksichtigt. Auf die erfindungsgemäßen Ausführungen zu dem selbstfahrenden Mähdrescher darf verwiesen werden.

Bevorzugt kann mittels der Bedien- und Anzeigeneinheit eine Auswahl von durch die Bildauswertungsvorrichtung analysierten Bildern dem Bediener zur Ansicht gebracht werden. In den anzuzeigenden Bildern sind die verschiedenen Klassen, die durch die Klassifizierung mittels des Maschinenlernalgorithmus bestimmt werden, visuell unterscheidbar dargestellt.

Die vorliegende Erfindung wird nachstehend anhand eines in den Zeichnungen dargestellten Ausführungsbeispieles näher erläutert.

Es zeigen:
- Fig. 1: schematisch und exemplarisch eine Seitenansicht eines selbstfahrenden Mähdreschers;
- Fig. 2: schematisch und exemplarisch eine Teilansicht des Mähdreschers mit einer Überkehrvorrichtung;
- Fig. 3: schematisch und exemplarisch eine perspektivische Ansicht einer Ausführungsform einer Kamera eines Kamerasystems zur Erfassung der Zusammensetzung eines von der Überkehrvorrichtung transportierten Überkehrgutstromes;
- Fig. 4: schematisch und exemplarisch ein mittels Bildauswertungsvorrichtung analysiertes und klassifiziertes Bild des Überkehrgutstromes; und
- Fig. 5: eine schematische Darstellung von Einstellautomaten des Mähdreschers.

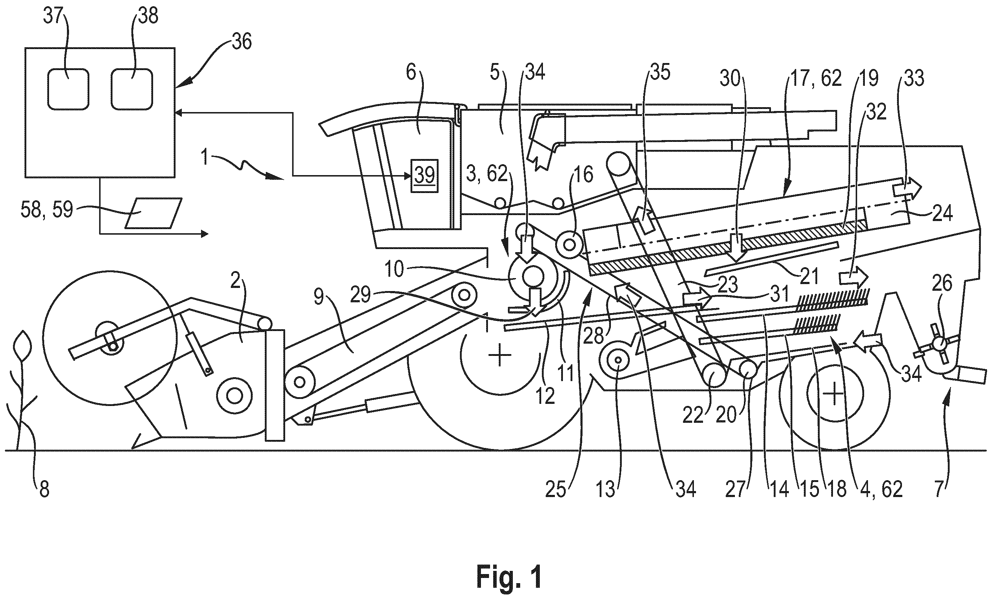

Die Darstellung in Fig. 1 zeigt schematisch und exemplarisch eine Seitenansicht eines selbstfahrenden Mähdreschers 1. Der Mähdrescher 1 trägt in seinem Frontbereich ein Vorsatzgerät 2, hier und vorzugsweise ein höhenverstellbares Schneidwerk, welches gewachsenes Erntegut 8 auf großer Breite aberntet und in seitlicher Richtung zusammenführt und an ein Schrägförderorgan 9 übergibt. Über das Schrägförderorgan 9 gelangt das Erntegut 8 in an sich bekannter Weise zu einer Dreschvorrichtung 3, die gemäß der dargestellten Ausführungsform zumindest eine Dreschtrommel 10, eine dieser nachgeordnete Zuführtrommel 16 und zumindest einen Dreschkorb 11 umfasst. Zusätzlich kann die Dreschvorrichtung 3 eine Vorbeschleunigertrommel umfassen, welche der Dreschtrommel 10 vorangestellt ist. Die Vorbeschleunigertrommel weist ebenfalls einen Dreschkorb auf. Durch Öffnungen des Dreschkorbs 11 hindurch wird aus dem Erntegut 8 ein im Wesentlichen aus einem Gemisch aus Körnern, Kurzstroh und Spreu bestehender Erntegutstrom 29 abgeschieden, der auf einen unterhalb des Dreschkorbs 11 angeordneten Vorbereitungsboden 12 fällt. Durch Rüttelbewegungen des oszillierend angetriebenen Vorbereitungsbodens 12 wird das im Erntegutstrom 29 enthaltene Erntegut 8 darauf nach hinten in Richtung einer Reinigungsvorrichtung 4 gefördert.

Der nicht durch den Dreschkorb 11 hindurchgetretene Teil des Erntegutstroms 29 wird von der Zuführtrommel 16 zu einer als Axialtrennrotor ausgeführten Abscheidevorrichtung 17 weiterbefördert, die sich in Längsrichtung des Mähdreschers 1 erstreckt. Der Axialtrennrotor ist in seinem unteren Bereich von einem halbzylindrischen Abscheidekorb 19 umgeben, durch den ein im Wesentlichen aus einem Gemisch aus Körnern und Ährenbruchstücken bestehender Erntegutstrom 30 abgeschieden wird, der auf einen unterhalb des Abscheidekorbes 19 des Axialtrennrotors angeordneten Rücklaufboden 21 gelangt.

Anstelle eines einzelnen Axialtrennrotors könnten auch zwei Axialtrennrotoren parallel nebeneinander vorgesehen sein. Alternativ kann als Abscheidevorrichtung 17 ein Hordenschüttler anstelle des zumindest einen Axialtrennrotors zum Einsatz kommen.

Restliches Erntegut, im Wesentlichen Stroh, welches am rückwärtigen Ende 24 der Abscheidevorrichtung 17 als Resterntegutstrom 33 ausgeworfen wird, gelangt zu einer Verteilvorrichtung 7 am Heck des Mähdreschers 1, wo es von einem Häcksler 26 zerkleinert werden kann und schließlich auf den Boden eines Feldes ausgebracht wird.

Auf dem oszillierend angetriebenen Rücklaufboden 21 wird der durch den Abscheidekorb 19 der Abscheidevorrichtung 17 abgegebene Erntegutstrom 30 in Richtung der Dreschvorrichtung 3 gefördert und an den Vorbereitungsboden 12 übergeben, wo sich der Erntegutstrom 30 des Rücklaufbodens 21 mit dem durch den zumindest Dreschkorb 11 hindurchgetretenen Erntegutstrom 29 vereinigt, der von dem Vorbereitungsboden 12 an die Reinigungsvorrichtung 4 abgegeben wird.

Die Reinigungsvorrichtung 4 umfasst ein Obersieb 14, ein Untersieb 15 sowie ein Reinigungsgebläse 13, welches einen durch und über die Siebe 14, 15 streichenden Luftstrom erzeugt. Das in den dem Vorbereitungsboden 12 beziehungsweise dem Rücklaufboden 21 zugeführten Erntegutströmen 29, 30 enthaltene Korn passiert als vereinigter Erntegutstrom 31 nacheinander das Obersieb 14 sowie das Untersieb 15 und erreicht als gereinigter Erntegutstrom 35 über einen darunterliegenden Boden 18 eine Schneckenfördereinrichtung 22 und einen Kornelevator 23, der es in einen im Rücken der Fahrerkabine 6 angeordneten Korntank 5 fördert.

Bestandteile des vereinigten Erntegutstroms 31, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom des Reinigungsgebläses 13 erfasst und mitgerissen, erreichen die Verteilvorrichtung 7 und werden über diesen als Teilstrom 32 ausgeschieden. Schwere, gröbere Anteile des Erntegutstromes 31, wie unausgedroschene Ährenspitzen, von Spelzen oder Grannen teilweise umschlossene Körner, gelangen als Überkehrgutstrom 34 am rückwärtigen Ende der Siebe 14, 15 auf eine unterhalb des Untersiebes 15 angeordnete Leitfläche 40. Von der Leitfläche 40 gelangt der Überkehrgutstrom 34 in eine unterhalb der Siebe 14, 15 quer verlaufende Mulde 27. Eine in der Mulde 27 rotierende Querförderschnecke 20 fördert den Überkehrgutstrom 34 seitwärts zu einer Fördervorrichtung 28, die hier und vorzugsweise als Überkehrelevator ausgeführt ist. Die Fördervorrichtung 28 als Teil einer Überkehrvorrichtung 25 fördert den Überkehrgutstrom 34 zurück zur Dreschvorrichtung 3 zum erneuten Ausdrusch zurück. An bzw. in der Fördervorrichtung 28 kann eine Nachdrescheinrichtung angeordnet sein.

Die Dreschvorrichtung 3, die Abscheidevorrichtung 17 sowie die Reinigungsvorrichtung 4 bilden Arbeitsaggregate 62 des Mähdreschers 1. Der Mähdrescher 1 umfasst zur Ansteuerung dieser Arbeitsaggregate 62 ein Fahrerassistenzsystem 36.

Das Fahrerassistenzsystem 36 steuert den Mähdrescher 1, indem es Maschinenparameter an den Arbeitsaggregaten 62 nach Art einer Steuerung und/oder Regelung einstellt. Es ist somit hier und vorzugsweise direkt in die Funktionen des Mähdrescher 1 eingebunden. Das Fahrerassistenzsystem 36 umfasst einen Speicher 37 zum Hinterlegen von Daten und eine Rechenvorrichtung 38 zur Verarbeitung der in dem Speicher 37 hinterlegten Daten. Die in dem Speicher 37 hinterlegten Daten können von maschineninternen Sensorsystemen generierte Informationen, von externen Systemen generierte Information und unmittelbar in der Rechenvorrichtung 38 hinterlegte Informationen umfassen. Das Fahrerassistenzsystem 36 kann über eine in der Fahrerkabine 6 des Mähdreschers 1 angeordnete Bedien- und Anzeigeneinheit 39 betrieben werden. Grundsätzlich ist das Fahrerassistenzsystem 36 dazu eingerichtet, einen Fahrer des Mähdreschers 1 bei der Bedienung des Mähdreschers 1 zu unterstützen.

Die Zusammensetzung des Überkehrgutstromes 34 hängt von den Einstellungen der Arbeitsaggregate 62 ab. Insbesondere die Dreschvorrichtung 3 und die Reinigungsvorrichtung 4 haben Einfluss auf die Zusammensetzung des Überkehrgutstromes 34.

Grundsätzlich ist die Einstellung der Dreschvorrichtung 3 so zu wählen, dass so sanft wie möglich und so intensiv wie nötig gedroschen wird. Da die Abreißkräfte der verschiedenen Körner unterschiedlich groß ausfallen, ist immer ein Kompromiss zu wählen und ein gewisses Maß an nicht ausgedroschenem Erntegut 8 ist somit zulässig. Bei einem optimal eingestelltem Mähdrescher 1 werden unausgedroschene Fraktionen 57B des Erntegutes 8 vom Dreschkorb 11 der Dreschvorrichtung 3 oder vom Abscheidekorb 19 der Abscheidevorrichtung 17 separiert und auch vom Obersieb 14 der Reinigungsvorrichtung 4 abgeschieden. Die abgeschiedenen unausgedroschenen Fraktionen 57B gelangen als Überkehrgutstrom 34 in die Überkehrvorrichtung 25 und werden erneut der Dreschvorrichtung 3 zugeführt. In diesem Fall ist die Einstellung optimal gewählt.

Falls die unausgedroschenen Fraktionen 57B nicht der Dreschvorrichtung 3 oder der Abscheidevorrichtung 17 abgeschieden werden, so werden sie mit dem Resterntegutstrom 31 dem Häcksler 26 zugeführt und durch die Verteilvorrichtung 7 ausgeworfen oder im Schwad abgelegt. Dort verbleiben die mit dem Resterntegutstrom 31 ausgeschiedenen unausgedroschenen Fraktionen 57B als Ausdruschverluste auf dem Feld.

Die von der Dreschvorrichtung 3 und der Abscheidevorrichtung 17 abgeschiedenen unausgedroschenen Fraktionen 57B werden, die das Obersieb 14 nicht passieren, werden mit dem Teilstrom 32 als Ausdruschverluste durch einen Spreuverteiler auf dem Feld verteilt.

Passieren die unausgedroschenen Fraktionen 57B sowohl das Obersieb 14 als auch das Untersieb 15, können sie gemeinsam mit dem gereinigten Erntegutstrom 34 in den Korntank 5 gelangen. Diese ungewollten Beimengungen können die qualitative Beurteilung des Korns beim Verkauf beeinflussen.

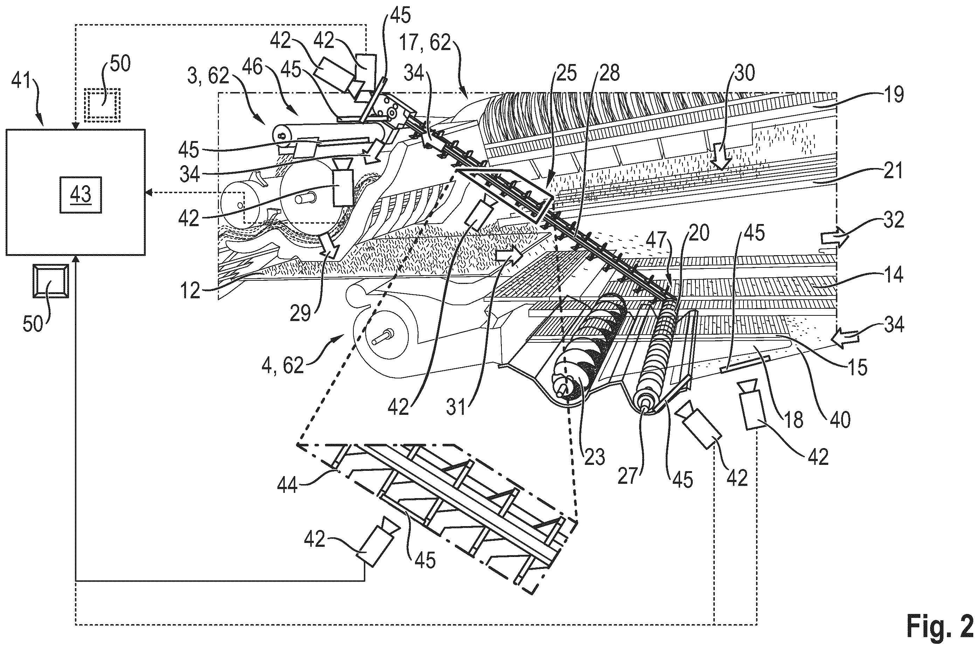

Die Darstellung in Fig. 2 zeigt schematisch und exemplarisch eine Teilansicht des Mähdreschers 1 mit einer Überkehrvorrichtung 25. Die Überkehrvorrichtung 2 umfasst als Komponenten die Leitfläche 40 unterhalb der Reinigungsvorrichtung 4, die in der Mulde 27 angeordnete Querförderschnecke 20 sowie die Fördervorrichtung 28. Der von der Reinigungsvorrichtung 4 abgeschiedene Überkehrgutstrom gelangt über die Leitfläche 40 in die Querförderschnecke 20, welche den Überkehrgutstrom 34 mittels der Fördervorrichtung 28 der Dreschvorrichtung 3 zum erneuten Ausdrusch zuführt.

Der Mähdrescher 1 umfasst ein Kamerasystem zur Aufnahme von Bildern 50 des Überkehrgutstromes 34 und eine Bildauswertungsvorrichtung 41 zur Auswertung der von der zumindest einen Kamera 42 des Kamerasystems aufgenommenen Bilder 50. Die Bildauswertungsvorrichtung 41 ist dazu eingerichtet ist, die aufgenommenen Bilder 50 des Überkehrgutstromes 34 mittels eines Maschinenlernalgorithmus 43 zu analysieren. Der Maschinenlernalgorithmus 43 umfasst zumindest ein trainierbares neuronales Netzwerk zur Analyse der Bilder 50, wobei das zumindest eine neuronale Netzwerk die von der zumindest einen Kamera 42 des Kamerasystems empfangenen Bilder 50 mittels semantischer Segmentierung pixelweise analysiert und die Pixel einer Klassifizierung unterzieht.

Das Kamerasystem umfasst zumindest eine Kamera 42, welche entlang des Förderweges der Überkehrvorrichtung 25 in zumindest eine Komponente der Überkehrvorrichtung 25 integriert ist. In eine Komponente der Überkehrvorrichtung 25 integriert bedeutet in diesem Zusammenhang, dass die zumindest eine Kamera 42 der zumindest einen Komponente der Überkehrvorrichtung 25 in der Weise zugeordnet oder in dieser angeordnet ist, dass die Kamera 42 mit ihrem Erfassungsbereich auf den Überkehrgutstrom 34 ausgerichtet ist.

Bevorzugt ist die zumindest eine Kamera 42 entlang des Förderweges der Fördervorrichtung 28 angeordnet. Hier und vorzugsweise ist die Fördervorrichtung 28 als Überkehrelevator ausgeführt. Ein für sichtbares Licht transparentes Sichtfenster 45 ist in ein Wandsegment 44 der den Überkehrgutstrom 34 fördernden Fördervorrichtung 28 eingefügt. Das Sichtfenster 45 ist auf einer oder beiden Seiten mit einer Vergütungsschicht versehen, um unerwünschte Reflexe zu vermeiden. Als Material für das Sichtfenster 45 kann Saphirglas oder ein anderes verschleißresistentes Material verwendet werden. Das Überströmen des Sichtfensters 45 durch den Überkehrgutstrom hat den Vorteil, dass das Sichtfenster 45 kontinuierlich gereinigt wird.

Alternativ oder zusätzlich kann die zumindest eine Kamera 42 in die Leitfläche 40 integriert sein. Hierzu ist das Sichtfenster 45 in die Leitfläche 40 eingefügt. Die Kamera 42 ist entsprechend unterhalb der Leitfläche 40 angeordnet.

Alternativ oder zusätzlich kann die zumindest eine Kamera 42 in die die Querförderschnecke 20 abschnittsweise umgebende Mulde 27 integriert sein. Hierzu ist das Sichtfenster 45 in die Wandung der Mulde 27 eingefügt.

Alternativ oder zusätzlich kann die zumindest eine Kamera 42 im Abgabebereich 46 der Fördervorrichtung 28 oberhalb der Dreschvorrichtung 3 und/oder im Übergabebereich 47 zwischen der Querförderschnecke 20 und der Fördervorrichtung 28 integriert sein.

Bei einer Anordnung im Abgabebereich 46 der Fördervorrichtung 28 kann die zumindest eine Kamera 42 achsparallel zum Förderweg der Fördervorrichtung 28 angeordnet sein. Alternativ oder zusätzlich kann die zumindest eine Kamera 42 im Wesentlichen senkrecht zur Längsachse des Mähdreschers 1 angeordnet sein.

Die Bildauswertungsvorrichtung 41 ist dazu eingerichtet, die Bilder 50 des Überkehrgutstromes 34 zur Bestimmung von Indikatoren für durch zumindest eines der Arbeitsaggregate 62 verursachte Bearbeitungsverluste zu analysieren und an das Fahrerassistenzsystem 36 zu übertragen, welches die Indikatoren bei der Ansteuerung zumindest eines der Arbeitsaggregate 62 berücksichtigt.

Die Indikatoren sind eine Ausdruschqualität 57A und/oder ein detektierter Anteil an unausgedroschenen Fraktionen 57B des Erntegutes 8 im Überkehrgutstrom 34.

Die Ausdruschqualität 57A ist durch einen Bruchkornanteil, Risse im Korn, einen Anteil an unausgedroschenen Fraktionen 57B, einen Anteil an Nichtkornbestandteilen und/oder einen Anteil an Fremdbesatz im Überkehrgutstrom 34 bestimmt. Der Bruchkornanteil sowie Risse im Korn werden durch die Intensität des Ausdruschs beeinflusst. Mit zunehmender Intensität nimmt insbesondere der Bruchkornanateil zu. Eine zu geringe Intensität des Ausdruschs hat insbesondere die Zunahme des Anteils an unausgedroschenen Fraktionen 57B in den Erntegutströmen 29, 30 zur Folge.

Unausgedroschene Fraktionen 57B umfassen ganze Ähren, gefüllte Ährenspitzen, begrannte Körner, bespeltze Körner, Rispen und/oder mit Körnen besetzte Spindelsegmente. Die Zusammensetzung der unausgedroschene Fraktionen 57B variiert in Abhängigkeit vom aufgenommenen Erntegut 8.

Die Bearbeitungsverluste umfassen einen durch die Abscheidevorrichtung 17 und die Reinigungsvorrichtung 4 aus dem Mähdrescher 1 ausgeschiedenen Verlustanteil von unausgedroschenen Fraktionen 57B des Ernteguts 8, welcher aufgrund der durch Einstellungen der Dreschvorrichtung 3 erreichten Ausdruschqualität 57A unbearbeitet geblieben ist.

Der Klassifizierung durch den Maschinenlernalgorithmus 43 liegen Klassen aus der Gruppe ganze Ähren, gefüllte Ährenspitzen, begrannte Körner, bespeltze Körner, Rispen, mit Körnen besetzte Spindelsegmente, Beikrautsamen, Schalen, Stängel, Schoten, Spindel, Stroh und/oder Fremdkörper zugrunde.

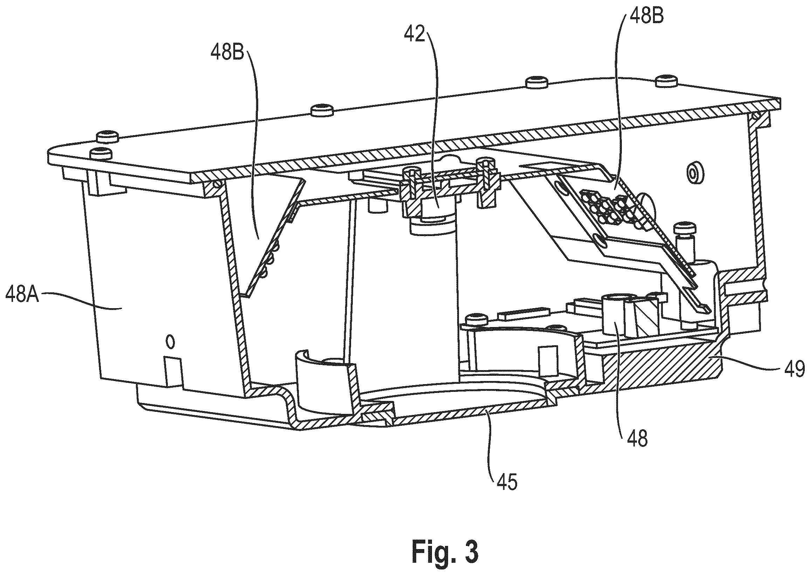

Die Darstellung in Fig. 3 zeigt schematisch und exemplarisch eine perspektivische Ansicht einer Ausführungsform der Kamera 42 des Kamerasystems zur Erfassung der Zusammensetzung des von der Überkehrvorrichtung 25 transportierten Überkehrgutstromes 34. Die Kamera 42 kann in einem Gehäuse 48A angeordnet sein. Die Kamera 42 weist einen Bildsensor und Linsen auf. Die Kamera 42 ist vor dem Sichtfenster 45 und koaxial zu diesem angeordnet. Das Sichtfenster 45 kann bevorzugt lösbar am Gehäuse 48A befestigt sein. Zur Ausleuchtung sind im Inneren des Gehäuses 48A LED-Arrays 48B angeordnet. Die LED-Arrays 48B sind so nahe wie möglich am Sichtfenster 45 angeordnet und gleichzeitig in einer Position, in welcher direkte Reflexionen im von der Kamera 42 aufgenommenen Bild 50 vom Sichtfenster 45 vermieden werden. Des Weiteren kann in das Gehäuse 48A eine Recheneinheit 48 integriert sein, welche zur Ausführung des Maschinenlernalgorithmus 43 eingerichtet ist. Hierbei bilden die in die Kamera 42 integrierte Recheneinheit 48 die Bildauswertungsvorrichtung 41.

Gemäß einer bevorzugten Ausführungsform werden die Bilder 50 in der Kamera 42 von der integrierten Recheneinheit 48 verarbeitet. Da die Ausführung des Maschinenlernalgorithmus 43 rechenintensiv ist, ist die Wärmeabgabe der Recheneinheit 48 hoch. Um die Abwärme der Recheneinheit 48 abzuführen, ist die Recheneinheit 48 in der bevorzugten Ausführungsform neben oder so gering wie möglich zum Überkehrgutstromes 34 beabstandet angeordnet. Hierzu kann die Recheneinheit 48 durch ein wärmeleitendes Bauteil 49 vom Überkehrgutstrom 34 separiert sein. Die Recheneinheit 48 kann somit durch den vorbeiströmenden Überkehrgutstrom 34 gekühlt werden. Die Kamera 42 weist eine Kommunikationsschnittstelle auf, um die Daten der Auswertung durch die Recheneinheit 48 an das Fahrerassistenzsystem 36 zu übertragen.

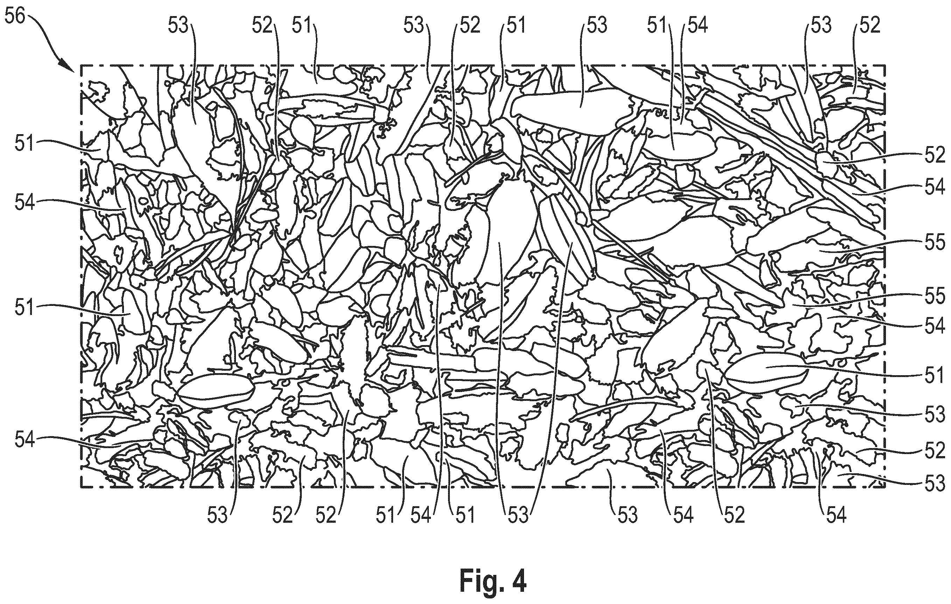

In Fig. 4 ist schematisch und exemplarisch ein einzelnes mittels der Bildauswertungsvorrichtung 41 analysiertes und klassifiziertes Bild 56 des Überkehrgutstromes 34 dargestellt. In Fig. 4 sind nach der Bildbearbeitung durch die Ausführung des Maschinenlernalgorithmus 43 Pixel des von der zumindest einen Kamera 42 aufgenommenen Bildes 50 des Überkehrgutstromes 34 als ganze Körner 51, als Bruchkorn 52, als Spelzen 53, als Nichtkornbestandteile 54 sowie als Hintergrund 55 klassifiziert worden. Mit der Klassifizierung von Pixeln als Hintergrund 55 sind die Bereiche des durch die zumindest eine Kamera 42 aufgenommenen Bildes 50 bezeichnet, welche nicht Bestandteil des Überkehrgutstromes 34 sind, sondern beispielsweise Teil der Überkehrvorrichtung 25 oder einer sonstigen Komponente des Mähdreschers 1, welche im Bilderfassungsbereich der zumindest einen Kamera 42 liegt.

Aus Gründen der Darstellbarkeit zeigt Fig. 4 nicht die tiefergehende Klassifizierung in die Klassen aus der Gruppe ganze Ähren, gefüllte Ährenspitzen, begrannte Körner, bespeltze Körner, Rispen, mit Körnen besetzte Spindelsegmente, Beikrautsamen, Schalen, Stängel, Schoten, Spindel, Stroh und/oder Fremdkörper.

Das Fahrerassistenzsystem 36 ist dazu eingerichtet, in Abhängigkeit von der Klassifizierung Steuersignale 58, 59 zur Ansteuerung zumindest eines der Arbeitsaggregate 62 zu generieren, um die Bearbeitungsverluste zu minimieren. Die tiefgehende Klassifizierung ermöglicht es, die Ausdruschqualität 57A sowie den Anteil an unausgedroschenen Fraktionen 57B detaillierter beurteilen zu können. Somit lassen sich die Steuersignale 58, 59 zur Anpassung von Maschinenparametern der Arbeitsaggregate 62 besser an eine von einem Bediener gewählte Bearbeitungsstrategie angepassen.

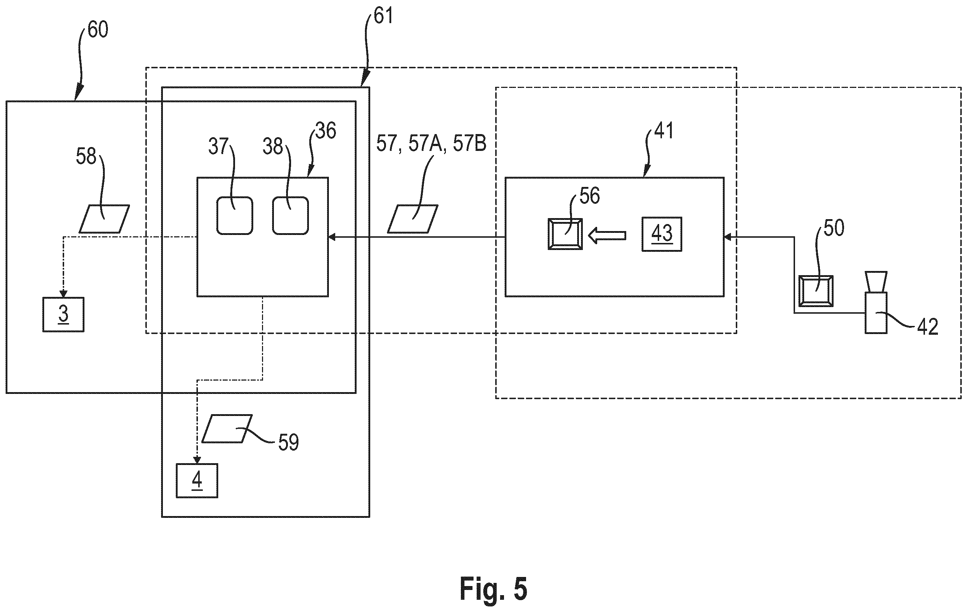

Die Darstellung in Fig. 5 zeigt eine schematische Darstellung von Einstellautomaten 60, 61 des Mähdreschers 1. Das Fahrerassistenzsystem 36 bildet mit der Dreschvorrichtung 3 sowie der Reinigungsvorrichtung 4 jeweils einen eigenständig arbeitenden Einstellautomaten 60, 61, welche der Optimierung der Durchführung eines jeweiligen Teilarbeitsprozesses dienen. Der Einstellautomat 60 dient der Optimierung der Ansteuerung der Dreschvorrichtung 3 und der Einstellautomat 61 der Optimierung der Ansteuerung der Reinigungsvorrichtung 4. Hierzu sind im Speicher 37 des Fahrerassistenzsystems 36 eine Mehrzahl auswählbarer Ernteprozessstrategien hinterlegt. Die Rechenvorrichtung 38 ist dazu eingerichtet, zur Umsetzung der ausgewählten Ernteprozessstrategie bzw. der Ernteprozessstrategien mindestens einen Maschinenparameter für das jeweils anzusteuernde Arbeitsaggregat 62 autonom zu ermitteln und vorzugeben. Auf diese Weise wird ein Einstellautomat 60, 61 bereitgestellt, welcher alle für die Arbeit des jeweiligen Arbeitsaggregates 62 relevanten Größen umfassend untereinander koordiniert regelt.

Dabei können die Bildauswertungsvorrichtung 41 und die zumindest eine Kamera 42 eine Einheit bilden. Alternativ können die Bildauswertungsvorrichtung 41 und das Fahrerassistenzsystem 36 eine Einheit bilden. Die Bildauswertungsvorrichtung 41, das Fahrerassistenzsystem 36 sowie die zumindest eine Kamera 42 können auch als räumlich getrennte Einheiten ausgeführt sein, die an verschiedenen Positionen des Mähdreschers 1 angeordnet sind.

Die Bildauswertungsvorrichtung 41 ist dazu eingerichtet, die von der Bildauswertungsvorrichtung 41 bestimmten Indikatoren, die Ausdruschqualität 57A, sowie der detektierte Anteil an unausgedroschenen Fraktionen 57B für die Bearbeitungsverluste den Einstellautomaten 60, 61 als Eingangsgrößen 57 zur Verfügung zu stellen.

Die Einstellautomaten 60, 61 werden dadurch realisiert, dass in dem Speicher 37 des Fahrerassistenzsystems 36 zudem Kennfelder hinterlegt sind und die Rechenvorrichtung 38 dazu eingerichtet ist, mittels der hinterlegten Kennfelder den jeweiligen Einstellautomaten 60, 61 als Kennfeldsteuerung zu betreiben. Der jeweilige Einstellautomat 60, 61 ist dazu eingerichtet, bei der Optimierung der Maschinenparameter der Dreschvorrichtung 3 bzw. der Reinigungsvorrichtung 4 die Eingangsgrößen 57 zu berücksichtigen, die durch die Bildauswertung mittels des Maschinenlernalgorithmus 43 bestimmt werden. In Abhängigkeit von den Eingangsgrößen 57 generiert der jeweilige Einstellautomat 60, 61 die Steuersignale 58, 59 zur Ansteuerung zumindest eines der Arbeitsaggregate 62, durch welche eine Minimierung der Bearbeitungsverluste erreicht werden soll.

Die Bildauswertungsvorrichtung 41 kann dazu eingerichtet sein, die Ergebnisse der Analyse mittels der Bedien- und Anzeigeneinheit 39 dem Bediener des Mähdreschers 1 zur Anzeige zu bringen.

### Bezugszeichenliste

| | | | |
|---|---|---|---|
| 1 | Mähdrescher | 34 | Überkehrgutstrom |
| 2 | Vorsatzgerät | 35 | Erntegutstrom |
| 3 | Dreschvorrichtung | 36 | Fahrerassistenzsystem |
| 4 | Reinigungsvorrichtung | 37 | Speicher |
| 5 | Korntank | 38 | Rechenvorrichtung |
| 6 | Fahrerkabine | 39 | Bedien- und Anzeigeneinheit |
| 7 | Verteilvorrichtung | 40 | Leitfläche |
| 8 | Erntegut | 41 | Bildauswertungsvorrichtung |
| 9 | Schrägförderorgan | 42 | Kamera |
| 10 | Dreschtrommel | 43 | Maschinenlernalgorithmus |
| 11 | Dreschkorb | 44 | Wandsegment |
| 12 | Vorbereitungsboden | 45 | Sichtfenster |
| 13 | Reinigungsgebläse | 46 | Abgabebereich |
| 14 | Obersieb | 47 | Übergabebereich |
| 15 | Untersieb | 48 | Recheneinheit |
| 16 | Zuführtrommel | 48A | Gehäuse |
| 17 | Abscheidevorrichtung | 48B | LED-Array |
| 18 | Boden | 49 | Bauteil |
| 19 | Abscheidekorbe | 50 | Bild |
| 20 | Querförderschnecke | 51 | Ganze Körner |
| 21 | Rücklaufboden | 52 | Bruchkorn |
| 22 | Schneckenfördereinrichtung | 53 | Spelzen |
| 23 | Kornelevator | 54 | Nichtkornbestandteil |
| 24 | Rückwärtiges Ende von 1 | 55 | Hintergrund |
| 25 | Überkehrvorrichtung | 56 | Klassifiziertes Bild |
| 26 | Häcksler | 57 | Eingangsgröße |
| 27 | Mulde | 57A | Ausdruschqualität |
| 28 | Fördervorrichtung | 57B | Unausgedroschene Fraktion |
| 29 | Erntegutstrom | 58 | Steuersignal |
| 30 | Erntegutstrom | 59 | Steuersignal |
| 31 | Erntegutstrom | 60 | Einstellautomat |
| 32 | Teilstrom | 61 | Einstellautomat |
| 33 | Resterntegutstrom | 62 | Arbeitsaggregat |

## Patentansprüche

1. Mähdrescher (1), welcher eine Dreschvorrichtung (3) und eine Abscheidevorrichtung (17) als Arbeitsaggregate (62) aufweist, welche von dem Mähdrescher (1) aufgenommenes Erntegut (8) zur Abscheidung von Korn bearbeiten und einen im Wesentlichen das Korn enthaltenden Erntegutstrom an eine Reinigungsvorrichtung (4) als weiteres Arbeitsaggregat (62) übergeben, wobei die Reinigungsvorrichtung (4) einen unausgedroschenes Erntegut enthaltenden Überkehrgutstrom (34) mittels einer Überkehrvorrichtung (25) der Dreschvorrichtung (3) zum erneuten Ausdrusch zuführt und einen gereinigten Erntegutstrom (35) mittels einer Fördervorrichtung (23) einem Korntank (5) zuführt, **dadurch gekennzeichnet, dass** der Mähdrescher (1) ein Kamerasystem zur Aufnahme von Bildern (50) des Überkehrgutstromes (34) und eine Bildauswertungsvorrichtung (41) zur Auswertung der Bilder (50) sowie ein Fahrerassistenzsystem (36) zur Ansteuerung der Arbeitsaggregate (62) umfasst, wobei die Bildauswertungsvorrichtung (41) dazu eingerichtet ist, die Bilder (50) des Überkehrgutstromes (34) zur Bestimmung von Indikatoren für durch zumindest eines der Arbeitsaggregate (62) verursachte Bearbeitungsverluste zu analysieren und an das Fahrerassistenzsystem (17) zu übertragen, welches die Indikatoren bei der Ansteuerung zumindest eines der Arbeitsaggregate (62) berücksichtigt.

2. Mähdrescher (1) nach Anspruch 1, **dadurch gekennzeichnet, dass** die Indikatoren eine Ausdruschqualität (57A) und/oder ein detektierter Anteil an unausgedroschenen Fraktionen (57B) des Erntegutes(8) im Überkehrgutstrom (34) sind.

3. Mähdrescher (1) nach Anspruch 2, **dadurch gekennzeichnet, dass** unausgedroschene Fraktionen (57B) ganze Ähren, gefüllte Ährenspitzen, begrannte Körner, bespeltze Körner, Rispen und/oder mit Körnen besetzte Spindelsegmente umfassen.

4. Mähdrescher (1) nach Anspruch 2 oder 3, **dadurch gekennzeichnet, dass** die Ausdruschqualität (57A) durch einen Bruchkornanteil, Risse im Korn, einen Anteil an unausgedroschenen Fraktionen (57B), einen Anteil an Nichtkornbestandteilen und/oder einen Anteil an Fremdbesatz im Überkehrgutstrom (34) bestimmt ist.

5. Mähdrescher (1) nach einem der Ansprüche 2 bis 4, **dadurch gekennzeichnet, dass** die Bearbeitungsverluste einen durch die Abscheidevorrichtung (17) und die Reinigungsvorrichtung (4) aus dem Mähdrescher (1) ausgeschiedenen Verlustanteil von unausgedroschenen Fraktionen (57B) des Erntegutes (8) umfassen, welcher aufgrund der durch Einstellungen der Dreschvorrichtung (3) erreichten Ausdruschqualität (57A) unbearbeitet geblieben ist.

6. Mähdrescher (1) nach einem der vorangehenden Ansprüche, **dadurch gekennzeichnet, dass** das Kamerasystem zumindest eine Kamera (42) umfasst, welche entlang des Förderweges der Überkehrvorrichtung (25) in zumindest eine Komponente der Überkehrvorrichtung (25) integriert ist.

7. Mähdrescher (1) nach einem der vorangehenden Ansprüche, **dadurch gekennzeichnet, dass** die Überkehrvorrichtung (25) eine Leitfläche (40) unterhalb der Reinigungsvorrichtung (4), eine in einer Mulde (27) angeordnete Querförderschnecke (20) sowie eine Fördervorrichtung (28) als Komponenten umfasst, wobei der von der Reinigungsvorrichtung (4) abgeschiedene Überkehrgutstrom (34) über die Leitfläche (40) in die Querförderschnecke (20) gelangt, welche den Überkehrgutstrom (34) mittels der Fördervorrichtung (28) der Dreschvorrichtung (3) zuführt.

8. Mähdrescher (1) nach Anspruch 7, **dadurch gekennzeichnet, dass** die zumindest eine Kamera (42) in die Leitfläche (40), in die Mulde (27), entlang des Förderweges der Fördervorrichtung (28), im Abgabebereich (46) der Fördervorrichtung (28) oberhalb der Dreschvorrichtung (3) und/oder im Übergabebereich (47) zwischen der Querförderschnecke (20) und der Fördervorrichtung (28) integriert ist.

9. Mähdrescher (1) nach einem der vorangehenden Ansprüche, **dadurch gekennzeichnet, dass** die Bildauswertungsvorrichtung (41) dazu eingerichtet ist, die Bilder (50) des Überkehrgutstromes (34) mittels eines Maschinenlernalgorithmus (43) zu analysieren.

10. Mähdrescher (1) nach Anspruch 9, **dadurch gekennzeichnet, dass** der Maschinenlernalgorithmus (43) zumindest ein trainierbares neuronales Netzwerk zur Analyse der Bilder (50) umfasst, wobei das zumindest eine neuronale Netzwerk die von dem Kamerasystem empfangenen Bilder (50) mittels semantischer Segmentierung pixelweise analysiert und die Pixel einer Klassifizierung unterzieht.

11. Mähdrescher (1) nach Anspruch 10, **dadurch gekennzeichnet, dass** der Klassifizierung Klassen aus der Gruppe ganze Ähren, gefüllte Ährenspitzen, begrannte Körner, bespeltze Körner, Rispen, mit Körnen besetzte Spindelsegmente, Beikrautsamen, Schalen, Stängel, Schoten, Spindel, Stroh und/oder Fremdkörper zugrunde liegen.

12. Mähdrescher (1) nach Anspruch 10 oder 11, **dadurch gekennzeichnet, dass** das Fahrerassistenzsystem (36) dazu eingerichtet ist, in Abhängigkeit von der Klassifizierung Steuersignale (58, 59) zur Ansteuerung zumindest eines der Arbeitsaggregate (62) zu generieren, um die Bearbeitungsverluste zu minimieren.

13. Mähdrescher (1) nach einem der vorangehenden Ansprüche, **dadurch gekennzeichnet, dass** das Fahrerassistenzsystem (36) mit der Dreschvorrichtung (3) sowie der Reinigungsvorrichtung (4) jeweils einen eigenständig arbeitenden Einstellautomaten (60, 61) bildet, welcher der Optimierung der Ansteuerung der Dreschvorrichtung (3) und der Reinigungsvorrichtung (4) zur Durchführung eines jeweiligen Teilarbeitsprozesses dient.

14. Mähdrescher (1) nach Anspruch 13, **dadurch gekennzeichnet, dass** die Bildauswertungsvorrichtung (41) dazu eingerichtet ist, die von der Bildauswertungsvorrichtung (41) bestimmten Indikatoren für die Bearbeitungsverluste den Einstellautomaten (60, 61) als Eingangsgrößen (57) zur Verfügung zu stellen.

15. Verfahren zum Betreiben eines Mähdreschers (1), welcher eine Dreschvorrichtung (3) und eine Abscheidevorrichtung (4) als Arbeitsaggregate (62) aufweist, durch welche von dem Mähdrescher (1) aufgenommenes Erntegut (8) zur Abscheidung von Korn bearbeitet und einen im Wesentlichen das Korn enthaltenden Erntegutstrom (32) an eine Reinigungsvorrichtung (4) als weiteres Arbeitsaggregat (62) übergeben wird, wobei von der Reinigungsvorrichtung (4) ein unausgedroschenes Erntegut enthaltender Überkehrgutstrom (34) mittels einer Überkehrvorrichtung (25) der Dreschvorrichtung (3) zum erneuten Ausdrusch zugeführt und ein gereinigter Erntegutstrom (35) einem Korntank (5) zugeführt wird, **dadurch gekennzeichnet, dass** mittels eines im Mähdrescher (1) angeordneten Kamerasystems Bilder (50) des Überkehrgutstromes (34) aufgenommen und an eine Bildauswertungsvorrichtung (41) zur Auswertung der Bilder (50) übermittelt werden, wobei die Arbeitsaggregate (62) durch ein Fahrerassistenzsystem (36) angesteuert werden, wobei die aufgenommenen Bilder (50) des Überkehrgutstromes (41) zur Bestimmung von Indikatoren für durch zumindest eines der Arbeitsaggregate (62) verursachte Bearbeitungsverluste durch die Bildauswertungsvorrichtung (41) analysiert und an das Fahrerassistenzsystem (36) übertragen werden, welches die Indikatoren bei der Ansteuerung zumindest eines der Arbeitsaggregate (62) berücksichtigt.
